(19) Europäisches Patentamt / European Patent Office / Office européen des brevets

(11) **EP 2 027 728 B1**

(12) **EUROPÄISCHE PATENTSCHRIFT**

(45) Veröffentlichungstag und Bekanntmachung des Hinweises auf die Patenterteilung:
**22.01.2014 Patentblatt 2014/04**

(21) Anmeldenummer: 07724476.2

(22) Anmeldetag: **23.04.2007**

(51) Int Cl.:
**H04N 13/00** (2006.01)   **G06T 15/20** (2011.01)

(86) Internationale Anmeldenummer:
**PCT/EP2007/003546**

(87) Internationale Veröffentlichungsnummer:
**WO 2007/121970 (01.11.2007 Gazette 2007/44)**

(54) **VERFAHREN UND VORRICHTUNG ZUR PSEUDOHOLOGRAPHISCHEN BILDERZEUGUNG**

METHOD AND DEVICE FOR THE CREATION OF PSEUDO-HOLOGRAPHIC IMAGES

PROCÉDÉ ET DISPOSITIF DE PRODUCTION D'IMAGES PSEUDOHOLOGRAPHIQUES

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **21.04.2006 DE 102006019169**

(43) Veröffentlichungstag der Anmeldung:
**25.02.2009 Patentblatt 2009/09**

(73) Patentinhaber: **Sterrix Technologies UG**
**21255 Kakenstorf (DE)**

(72) Erfinder:
• **KAMINS-NASKE, Sigrid**
**21255 Kakenstorf (DE)**
• **NASKE, Ivo-Henning**
**21255 Kakenstorf (DE)**
• **NASKE, Valerie Antonia**
**21255 Kakenstorf (DE)**

(74) Vertreter: **Ullrich & Naumann**
**Patent- und Rechtsanwälte**
**Schneidmühlstrasse 21**
**69115 Heidelberg (DE)**

(56) Entgegenhaltungen:
**US-A1- 2004 100 464**

• **HUANG H-C ET AL: "GENERATION OF MULTIVIEWPOINT VIDEO FROM STEREOSCOPIC VIDEO" IEEE TRANSACTIONS ON CONSUMER ELECTRONICS, IEEE SERVICE CENTER, NEW YORK, NY, US, Bd. 45, Nr. 1, Februar 1999 (1999-02), Seiten 124-134, XP000888364 ISSN: 0098-3063**
• **HENDRIKS E A ET AL: "REAL TIME SYNTHESIS OF DIGITAL MULTI VIEWPOINT STEREOSCOPIC IMAGES" PROCEEDINGS OF THE SPIE, SPIE, BELLINGHAM, VA, US, Bd. 3639, 25. Januar 1999 (1999-01-25), Seiten 266-276, XP008021883 ISSN: 0277-786X**

**Beschreibung**

Die Erfindung betrifft ein Verfahren und eine Vorrichtung zur Erzeugung von dreidimensionalen Bildern mit mehr als zwei Perspektiven (wie z.B. pseudoholographischen Bildern), insbesondere zur Wiedergabe mit einem autostereoskopischen Display oder einer autostereoskopischen Leinwand, aus zugeführten Bildern mit insbesondere nur zwei Perspektiven, wie z.B. aus einem linken und einem rechten Bildkanal. Die Erfindung betrifft ferner eine Vorrichtung zur Erzeugung und Wiedergabe von dreidimensionalen Bildern mit mehr als zwei Perspektiven, insbesondere in Form eines autostereoskopischen Mehrbetrachter-Visualisierungssystems (Multiview-System)

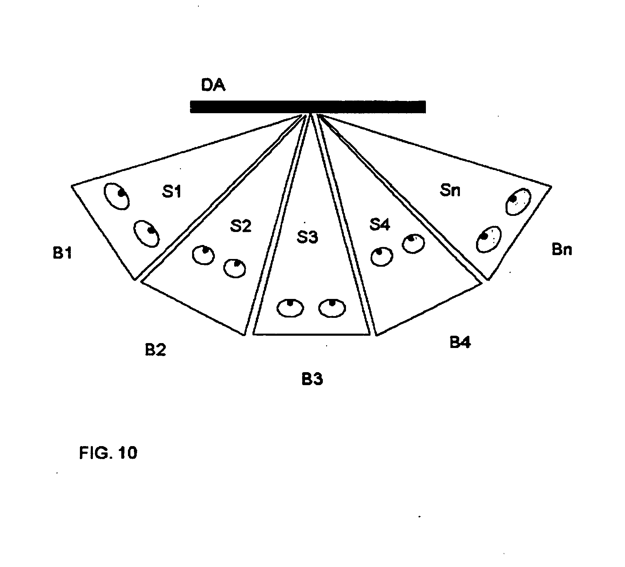

Autostereoskopische Visualisierungssysteme sollen es einem oder mehreren Betrachtern, die sich vor einem autostereoskopischen Display oder einer autostereoskopischen Leinwand befinden, ermöglichen, ein dreidimensionales Bild ohne Sehhilfen wie z.B. rot/blau-Brillen, Shutter- oder Polarisationsbrillen, etc. betrachten zu können. Zu diesem Zweck dienen z.B. Parallaxen-Barriere-Systeme oder Lentikularlinsen-Systeme, die auf das Display aufgesetzt werden. Da sich gemäß Figur 10 der oder die Betrachter B1...Bn jedoch in verschiedenen Winkeln relativ zu einer Richtung senkrecht zum Display oder der Leinwand DA befinden können, müssen stets mehr als zwei Perspektiven erzeugt und dem jeweiligen linkten bzw. rechten Auge zugeführt werden, um in allen solchen Positionen S1 bis Sn bzw. allen Betrachtern B1 bis Bn einen möglichst natürlichen dreidimensionalen Bildeindruck zu ermöglichen. Diese Systeme werden deshalb auch als Mehrbetrachter- oder Multiview-Systeme bezeichnet.

In der US 2004/0100464 A1 ist ein Verfahren zur Erzeugung eines synthetisieden dreidimensionalen Bildes von einem zweidimensionalen Quellbild zur Darstellung auf einem dreidimensionalen Abbildungsgerät basierend auf Tiefeninformationen gezeigt.

In der Nicht-Patentliteratur von Hendriks und Radert "Real Time Synthesis of Digital Multi Viewpoint Stereoscopic Images", Information and Communication Therory Group, Department of Electrical Engineering, Faculty of of Information Technology and Systems, Delft University of Technology, Mekelweg 4, 2628 CD Delft, The Netherlands, ist weiter ein Verfahren beschrieben, mit Hilfe dessen aus zwei zugeführten Bildern verschiedene Zwischenperspektiven erzeugt werden. Hierfür wird in einem ersten Schritt eine Repräsentation der Unterschiede zwischen den zugeführten Bildern geschätzt.

Unter Verbindung dieser Repräsentation und sog. "Disparity Paths" werden die Bilder von Zwischenperspektiven berechnet. Ebenso werden auch Rechts- und Linksverdeckungen in den Zwischenperspektiven abgebildet. Die derart berechneten Bilder werden dann auf einem autostereoskopischen Display ausgegeben.

Ein Problem hierbei besteht jedoch darin, dass insbesondere bei einer größeren Anzahl von erzeugten Perspektiven die Hardware-Kapazitäten des betreffenden Visualisierungssystems und insbesondere der erforderliche Speicherplatzbedarf sehr hoch werden.

Eine Aufgabe, die der Erfindung zu Grunde liegt, besteht darin, ein Verfahren und eine Vorrichtung zur Erzeugung von dreidimensionalen (insbesondere bewegten) Bildern mit mehr als zwei Perspektiven (wie z.B. pseudoholographischen Bildern) aus zugeführten Bildern mit insbesondere nur zwei Perspektiven, wie z.B. aus einem linken und einem rechten Bildkanal, zu schaffen, mit dem/der eine relative große Anzahl von solchen Perspektiven bei gleichzeitig relativ geringem Speicherplatzbedarf synthetisiert werden kann.

Weiterhin soll eine Vorrichtung zur Erzeugung und Wiedergabe von dreidimensionalen (insbesondere bewegten) Bildern mit mehr als zwei Perspektiven, insbesondere in Form eines autostereoskopischen Mehrbetrachter-Visualisierungssystems (Multiview-System) geschaffen werden, bei der/dem insbesondere auch bei einer relativ großen Anzahl von wiedergegebenen Perspektiven die Anforderungen an die Hardware und insbesondere der Speicherplatzbedarf relativ gering sind und die Vorrichtung somit relativ kostengünstig realisiert werden kann.

Die Aufgabe wird mit einem Verfahren gemäß Anspruch 1 und einer Vorrichtung gemäß Anspruch 8 bzw. einem Mehrbetrachter-Visualisierungssystem gemäß Anspruch 9 gelöst.

Ein Vorteil dieser Lösungen besteht darin, dass die Anzahl der zu erzeugenden Perspektiven von einem Benutzer weitgehend frei gewählt werden kann.

Die Unteransprüche haben vorteilhafte Weiterbildungen der Erfindung zum Inhalt.

Weitere Einzelheiten, Merkmale und Vorteile der Erfindung ergeben sich aus der folgenden Beschreibung von beispielhaften und bevorzugten Ausführungsformen der Erfindung anhand der Zeichnung. Es zeigt:

Fig. 1  ein schematisches Blockschaltbild eines Multiview-Systems mit einer erfindungsgemäßen Vorrichtung zur Erzeugung von 3D Bildern mit einer Mehrzahl von Perspektiven;

Fig. 2  eine schematische Darstellung verschiedener Korrespondenzen bzw. einer Rechts- und einer Linksverdeckung zwischen einem linken Bild, einem rechten Bild und sechs Zwischenbildern (Zwischenperspektiven);

Fig. 3  ein Flussdiagramm des Ablaufs einer ersten Ausführungsform eines erfindungsgemäßen Verfahrens zur Erzeugung von dreidimensionalen Bildern;

Fig. 4  ein Flussdiagramm des Ablaufs einer zweiten Ausführungsform eines erfindungsgemäßen Verfahrens zur Erzeugung von dreidimensionalen Bildern;

Fig. 5    eine schematische Darstellung der Korrespondenzen sowie der Rechts- und Linksverdeckung aus Figur 2 für einen ersten Synthesefall;

Fig. 6    eine schematische Darstellung der Korrespondenzen sowie der Rechts- und Linksverdeckung aus Figur 2 für einen zweiten Synthesefall;

Fig. 7    eine schematische Darstellung der Korrespondenzen sowie der Rechts- und Linksverdeckung aus Figur 2 für einen dritten Synthesefall;

Fig. 8    eine schematische Darstellung einer Matrixschaltung zur Ansteuerung jeder Linse einer Adapterscheibe über einem Pixel oder Subpixel eines Displays;

Fig. 9    eine schematische Darstellung eines Displays mit Bereichen zur zweidimensionalen bzw. dreidimensionalen Darstellung von Bildern; und

Fig. 10   eine schematische Darstellung der Positionen und Betrachtungswinkel verschiedener Betrachter in mehreren Sehzonen eines Multiview-Displays.

Wie bereits eingangs erwähnt wurde, werden bei einem autostereoskopischen Mehrbetrachter-Visualisierungssystem vor einem autostereoskopischen Display DA (Multiview-Display) bzw. einer autostereoskopischen Leinwand gemäß Figur 10 mehrere Sehzonen S1,... Sn erzeugt, in denen ein Betrachter B1,...Bn jeweils ein optimales dreidimensionales Bild betrachten kann.

Zu diesem Zweck wird eine Anzahl N (N > 2) von Perspektiven des darzustellenden Bildes so vermischt (im Folgenden als Verkämmung bezeichnet), dass das autostereoskopische Display sie auf Grund seiner zu Grunde liegenden Optik für jeden Betrachter B1,...Bn wieder so aufteilt, dass jedes Auge jedes Betrachters B1,...Bn in jeder Sehzone S1,..Sn eine unterschiedliche Perspektive sieht und damit der dreidimensionale Bildeindruck bei den Betrachtern erzeugt wird.

Folglich muss also aus im Allgemeinen nur zwei zugeführten Bild-Perspektiven, dass heißt einem linken und einem rechten Bild, eine vorgegebene Anzahl von Zwischenperspektiven erzeugt und so verkämmt werden, dass diese durch das Visualisierungssystem bzw. Display korrekt verarbeitet und wiedergegeben werden.

Die Anzahl und Lage der Sehzonen S1,...Sn, die erzeugt werden können, ist dabei von der Anzahl N der dargestellten und verkämmten Perspektiven abhängig. Je mehr Perspektiven zur Verfügung stehen, desto breiter werden die Sehzonen, und desto weiter werden die Übergangszonen zwischen zwei Sehzonen an die linke und rechte Seite des Gesamt-Betrachtungsbereiches vor dem Display DA gedrängt.

Bewegt sich jedoch ein Betrachter B1,..Bn vor dem Display DA (oder der Leinwand) von einer Sehzone Sx in eine benachbarte Sehzone Sx+1, so wandert für ihn ein Unschärfestreifen durch das Bild.

Es wird deshalb angestrebt, eine möglichst große Anzahl N von Perspektiven zur Verfügung zu haben. Dabei ergab sich bisher allerdings das Problem, dass mit zunehmender Anzahl von Perspektiven die Anforderungen an die Hardware und insbesondere die Speicherkapazität des betreffenden Visualisierungssystems stark anstiegen, so dass deshalb nur eine begrenzte Anzahl von Perspektiven erzeugt bzw. dargestellt werden konnte.

Mit der Erfindung wird nun ein Verfahren und eine Vorrichtung zur Erzeugung von dreidimensionalen Bildern mit einer Mehrzahl von verkämmten Perspektiven aus zugeführten Bildern insbesondere nur zweier Perspektiven geschaffen, bei dem/der die darzustellenden Bildpunkte einer frei wählbaren Anzahl von Zwischenperspektiven effizient in der Weise erzeugt werden, dass im wesentlichen immer nur diejenigen Bildpunkte eines Zwischenbildes (d.h. einer Zwischenperspektive) synthetisiert werden, die auch tatsächlich auf dem Multiview-Display zur Wiedergabe der betreffenden Zwischenperspektive angezeigt werden müssen. Umgekehrt wird also mindestens einer der Bildpunkte eines Zwischenbildes (d.h. einer Zwischenperspektive), der zur Wiedergabe des betreffenden Zwischenbildes (d.h. der Zwischenperspektive) nicht angezeigt werden muss (d.h. nicht benötigt wird), nicht synthetisiert, wobei zur Einsparung von Speicherplatzbedarf und Hardwareressourcen natürlich vorzugsweise möglichst viele oder alle solche nicht benötigten Bildpunkte nicht synthetisiert werden.

Dabei werden die Bildpunkte nicht einzeln adressiert, sondern die Bildpunkte werden direkt auf dem Display erzeugt, so dass zu keinem Zeitpunkt die Zwischenbilder als solche tatsächlich vorhanden sind und somit auch nicht gespeichert werden müssen.

Bei dem erfindungsgemäßen Verfahren hat der Betrachter vorzugsweise die Möglichkeit, zunächst eine beliebige Anzahl N (N > 2) von Perspektiven zu wählen, die auf dem Display oder der Leinwand dargestellt werden sollen. Weiterhin sei davon ausgegangen, dass sich in einem Bildspeicher jedoch nur eine Anzahl M von (zugeführten) Perspektiven befindet, so dass also eine Anzahl N-M von Zwischenbildern bzw. Zwischenperspektiven synthetisiert werden muss.

Zur Vereinfachung der weiteren Erläuterungen sei von dem im Allgemeinen üblichen Fall ausgegangen, dass nur zwei Perspektiven M, nämlich ein linkes und ein rechtes zugeführtes Bild, in dem Bildspeicher (oder einem Speicher für linke bzw. rechte Bilder) vorhanden sind. Das erfindungsgemäße Verfahren kann aber natürlich auch bei mehr als zwei zugeführten Perspektiven (M > 2) zur Erzeugung der erforderlichen Anzahl N-M von Zwischenbildern bzw. Zwischenperspektiven verwendet werden. In diesem Fall wird das erfindungsgemäße Verfahren vorzugsweise auf die äußerste linke und die äußerste rechte zugeführte Perspektive angewendet, während die dazwischen liegenden, zugeführten Perspektiven (Zwischenbilder) als Stützbilder verwendet werden.

Das erfindungsgemäße Verfahren zur Erzeugung der Zwischenbilder (bzw. Zwischenperspektiven) umfasst eine Korrespondenz-Analysephase und eine Zwischenbild- (bzw. Zwischenperspektiven-) Synthesephase. In der Analysephase wird zu jedem Bildpunkt B(i, j) im zugeführten linken Bild versucht, einen korrespondierenden Bildpunkt B(i', j') im zugeführten rechten Bild zu finden (die Begriffe "Zwischenbilder" und "Zwischenperspektiven" werden in dieser Beschreibung synonym verwendet).

Der Index i bzw. i' bezeichnet dabei die Nummer einer Zeile (Zeilenindex), und der Index j bzw. j' die Nummer einer Spalte (Spaltenindex) eines Bildes. Zur Vereinfachung der Erläuterungen sei im Folgenden angenommen, dass stets i = i' ist. Dies ist zulässig, wenn sich die Bilder in der Stereo-Normalform befinden, die ggf. durch eine entsprechende Vorverarbeitung oder Transformation der zugeführten Bilder erreicht werden kann.

Wenn die Korrespondenz B(i, j) -> B(i, j') bekannt und korrekt ist, können in der Synthesephase alle Zwischenbilder (Zwischenperspektiven) durch eine virtuelle Kamerafahrt auf der Stereobasis vom linken Bild zum rechten Bild (oder in umgekehrter Richtung) exakt erzeugt bzw. synthetisiert werden.

Ist dabei:

$$j(\alpha) := (1-\alpha)*j + \alpha*j' \text{ für } 0 <= \alpha <= 1,$$

so wird:

$$B(i, j(\alpha)) := B(i, j) \text{ für } 0 <= \alpha <= 1$$

gesetzt.

Das heißt insbesondere, dass

$$B(i, j(0)) = B(i, j) \text{ und } B(i, j(1)) = B(i, j')$$

ist, da B(i, j') der zu B(i, j) korrespondierende Bildpunkt ist.

Wandert $\alpha$ von 0 bis 1, so wandert B(i, j) auf seiner virtuellen Kamerafahrt von B(i, j) nach B(i, j') zu seinem korrespondierenden Bildpunkt.

Sofern N-2 Zwischenbilder erzeugt werden sollen (d.h. M = 2), wählt man $\alpha_k$ Stützstellen mit

$$0 < \alpha_k < 1 \text{ für } k = 1,\ldots N-2,$$

an denen die Bildpunkte B(i, j($\alpha_k$)) zu einem Zwischenbild zusammengefasst werden. Dabei wird vorzugsweise $\alpha_k := k/(N-1)$ äquidistant gesetzt.

Rechte Verdeckungen sind nun solche Bildpunkte B(i, j), die sich nur im linken Bild befinden und die für das rechte Auge verdeckt sind. Für diese Bildpunkte gibt es keine Korrespondenz im rechten Bild. Auf einer virtuellen Kamerafahrt vom linken Bild zum rechten Bild müssen diese Bildpunkte sukzessiv entfernt werden. Dabei beginnt man am rechten Rand der Rechtsverdeckung.

In entsprechender Weise gilt, dass linke Verdeckungen solche Bildpunkte B(i', j') sind, die sich nur im rechten Bild befinden und die für das linke Auge verdeckt sind. Für diese Bildpunkte gibt es keine Korrespondenz im linken Bild. Auf einer virtuellen Kamerafahrt vom linken Bild zum rechten Bild müssen diese Bildpunkte sukzessiv eingefügt werden. Dabei beginnt man am rechten Rand der Linksverdeckung.

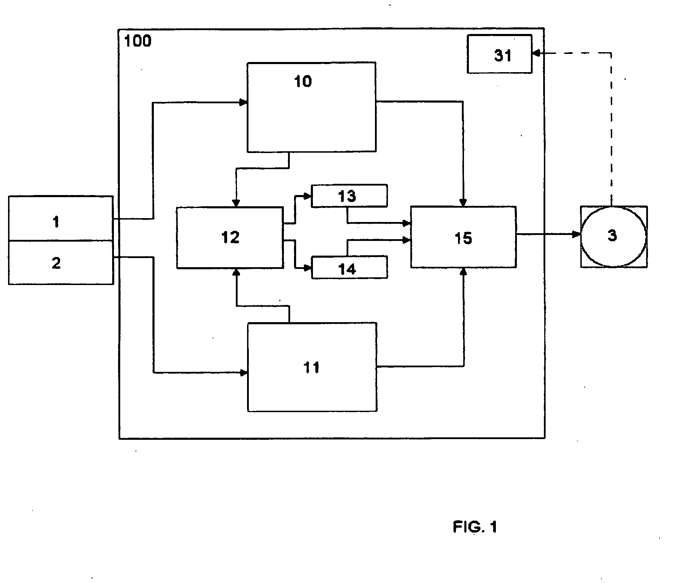

Figur 1 zeigt ein schematisches Blockschaltbild eines Multiview-Systems mit einer erfindungsgemäßen Vorrichtung 100 zur Erzeugung von dreidimensionalen Bildern mit mehr als zwei Perspektiven. Die Vorrichtung 100 ist über einen ersten Eingang mit einem linken Kanal 1 zur Zuführung von linken (bewegten oder Stand-) Bildern und über einen zweiten Eingang mit einem rechten Kanal 2 zu Zuführung von rechten (bewegten oder Stand-) Bildern, das heißt also zwei Perspektiven eines dreidimensionalen Bildes, verbunden. Ein anzusteuerndes autostereoskopisches Multiview-Display 3 ist mit einem Ausgang der Vorrichtung 100 verbunden.

Die Vorrichtung 100 umfasst im Wesentlichen einen ersten Bildspeicher 10 für mindestens ein linkes Bild und einen zweiten Bildspeicher 11 für mindestens ein rechtes Bild, die jeweils mit dem betreffenden ersten bzw. zweiten Eingang der Vorrichtung 100 verbunden sind. Die in dem ersten und zweiten Bildspeicher 10, 11 gespeicherten Bilder werden einer Analyseeinheit 12 zur Korrespondenzanalyse zugeführt. Ein erster Ausgang der Analyseeinheit 12 ist mit einer ersten Speichereinheit 13 für einen mit der Analyseeinheit 12 erzeugten Indikator "*Verdeckung(i, j)*" verbunden, während ein zweiter Ausgang der Analyseeinheit 12 mit einer zweiten Speichereinheit 14 für einen mit der Analyseeinheit 12 erzeugten Zeiger "*Wohin(i, j)*" verbunden ist.

Der in der ersten Speichereinheit 13 gespeicherte Indikator *Verdeckung(i, j)* wird einem ersten Eingang einer Bildsyntheseeinheit 15 zugeführt, während der in der zweiten Speichereinheit 14 gespeicherte Zeiger *Wohin(i, j)* einem zweiten Eingang der Bildsyntheseeinheit 15 zugeführt wird. An einem dritten Eingang der Bildsyntheseeinheit 15 liegt ferner ein linkes Bild aus dem ersten Bildspeicher 10 an, während einem vierten Eingang der Bildsyntheseeinheit 15 ein rechtes Bild aus dem zweiten Bildspeicher 11 zugeführt wird. Ober einen Ausgang der Bildsyntheseeinheit 15 werden die linken und rechten Bilder und die synthetisierten Zwischenbilder bzw. Zwischenperspektiven schließlich dem autostereoskopischen Multiview-Display 3 zur Wiedergabe zugeführt.

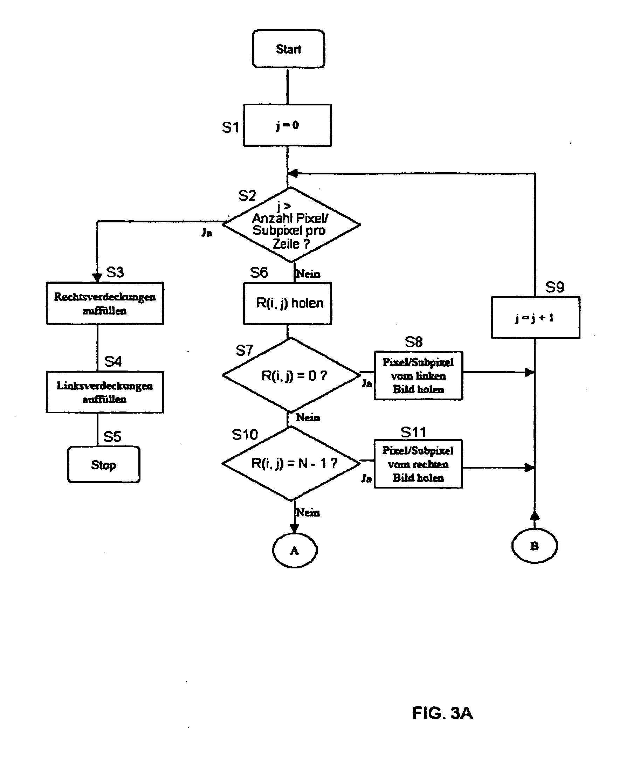

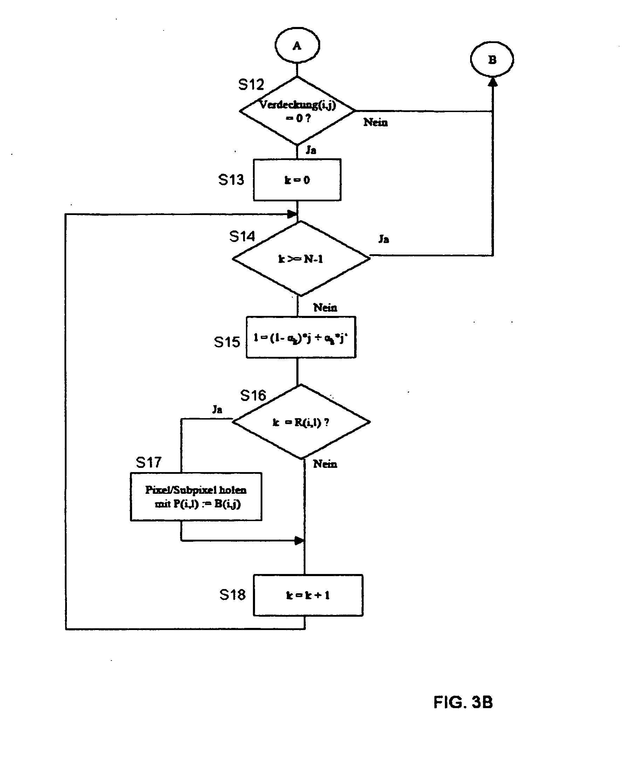

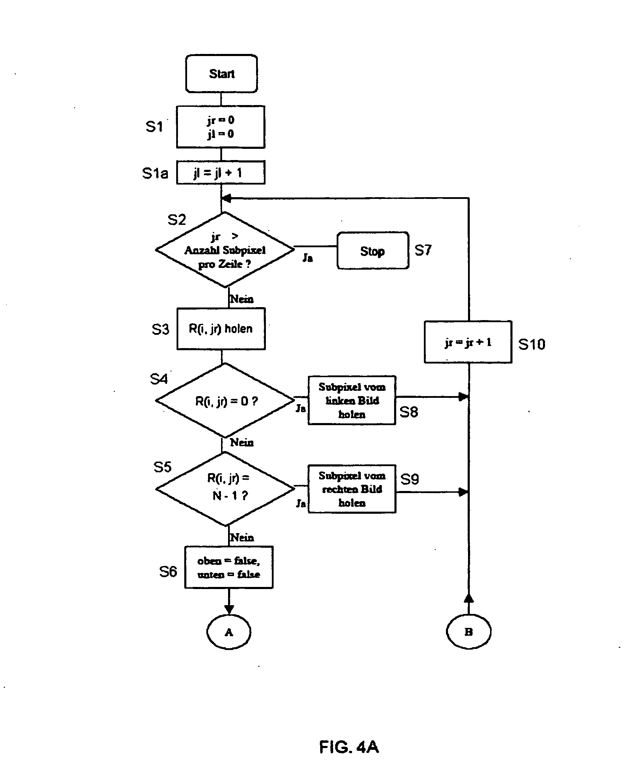

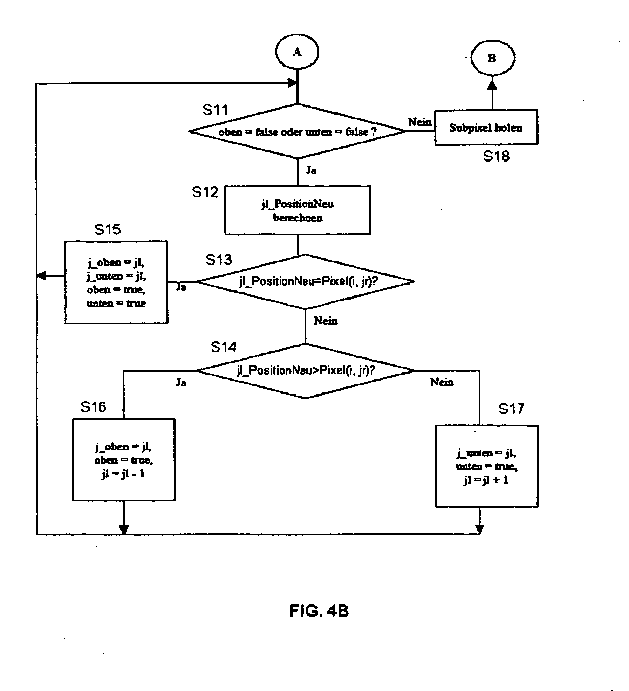

Die Vorrichtung 100 weist vorzugsweise auch einen Speicher 31 für eine Matrix R(i, j) und/oder R(i, jr) von Perspektiven auf, die im Falle von R(i, j) für jeden Pixel oder Subpixel (j) und im Falle von R(i, jr) für jeden Subpixel (jr) in jeder Zeile (i) des angeschlossenen Displays 3 in Abhängigkeit von dessen optischen Eigenschaften angibt, welche Perspektive (das heißt zugeführtes (linkes oder rechtes) Bild oder eine der synthetisierten Zwischenperspektiven) von dem jeweiligen Pixel bzw. Subpixel anzuzeigen ist. Die Matrix R(i, j) bzw. R(i, jr) wird entweder einmal vor der ersten Anwendung des Displays 3 mit den erfindungsgemäßen Verfahren (Figuren 3A, 3B; 4A, 4B) berechnet und in dem Speicher 31 gespeichert, oder, wenn sie in dem Display 3 gespeichert ist, aus dem Display 3 in den Speicher 31 übertragen, oder auf andere Weise der Vorrichtung 100 zugeführt. Die Matrix kann in bekannter Weise für ein anzuwendendes autostereoskopisches Display 3 ermittelt werden, oder sie wird vom Hersteller des Displays zur Verfügung gestellt.

Bei der im Folgenden beschriebenen ersten Ausführungsform des erfindungsgemäßen Verfahrens gemäß dem in den Figuren 3A und 3B gezeigten Flussdiagramm stellt jedes Zwischenbild eine der Zwischenperspektiven dar.

Zur Beschleunigung der Synthese der Zwischenbilder werden nicht verwendete Bildpunkte einer jeden Zwischenperspektive gar nicht erst synthetisiert. Hierzu wird wie folgt vorgegangen, wobei insbesondere diese erste Ausführungsform des Verfahrens auf Pixel-Ebene oder auf Subpixel-Ebene ausgeführt werden kann:

Für jeden Pixel/Subpixel P(i, l) auf dem Display 3 ist auf Grund der oben genannten Matrix bekannt, aus welcher Perspektive R (i, l) (0 <= R(i, l) <= N-1) der Bildpunkt stammen muss, der dort dargestellt werden soll.

Es wird daher festgelegt:

Für alle Spalten j aus dem Bildbereich und k = 1,...N-1, für die es eine Korrespondenz im rechten Bild gibt, berechne l := (1 - $\alpha_k$) -j + $\alpha_k$ -j' und setze P(i, l) := B(i, j), wenn k = R(i, l).

Für die linken und rechten Verdeckungen, bei denen sich keine Korrespondenzen B(i, j) -> B(i, j') finden lassen, wird in der folgenden Weise vorgegangen:

Eine Rechtsverdeckung, die im linken Bild vorhanden ist und rechts nicht, wird auf der virtuellen Kamerafahrt von links nach rechts immer mehr ausgeblendet. Dabei wandert die Ausblendung vom rechten Ausblendungsrand nach links. Für jede Perspektive ist nun bekannt, wie lang der noch darzustellende Verdeckungsstreifen in der Zeile ist. Es ist weiterhin bekannt, wohin dieser Streifen in der Perspektive k abgebildet wird. Somit kann für alle diese Pixel geprüft werden, ob dort k = R(i, l) ist. Nur diese Bildpunkte werden bei P(i, l) eingefügt.

Sinngemäß wird so auch für Linksverdeckungen vorgegangen.

Es wird also für jede Zeile i des Bildes das erfindungsgemäße Verfahren gemäß dem in den Figuren 3A und 3B gezeigten Flussdiagramm (erste Ausführungsform der Erfindung) wie folgt ausgeführt:

Nach dem Start des Verfahrens (das auf Pixel-Ebene oder auf Subpixel-Ebene ausgeführt werden kann) wird mit einem ersten Schritt S1 ein Zeiger j zur Bezeichnung eines Pixels bzw. Subpixels (Spaltenindex) auf 0 gesetzt.

Anschließend beginnt mit Schritt S2 eine Schleife über alle Pixel bzw. Subpixel j einer Zeile i, für die das Verfahren gerade durchgeführt wird, zu laufen. Sofern gemäß der Abfrage mit Schritt S2 j größer ist als die Anzahl der Pixel bzw. Subpixel pro Zeile, wird das Verfahren mit Schritt S3 fortgesetzt, mit dem Rechtsverdeckungen aufgefüllt werden. Anschließend werden gemäß Schritt S4 Linksverdeckungen aufgefüllt und das Verfahren schließlich mit Schritt S5 für die aktuelle Zeile beendet und gegebenenfalls für eine nächste Zeile erneut mit "Start" begonnen.

Wenn die Abfrage mit Schritt S3 jedoch mit "nein" beantwortet wird, wird mit Schritt S6 für den Pixel bzw. Subpixel j die Perspektive R(i, j) aus dem Speicher 31 geholt, die auf diesem Pixel bzw. Subpixel angezeigt werden muss.

Ist gemäß der Abfrage mit Schritt S7 diese Perspektive R(i, j) = 0, so wird gemäß Schritt S8 der Pixel bzw. Subpixel vom linken Bild geholt. Anschließend wird mit Schritt S9 der Spaltenindex j um 1 inkrementiert, zu Schritt S2 zurückgesprungen und der Ablauf wiederholt.

Wird jedoch die Abfrage mit Schritt S7 mit "nein" unbeantwortet, so wird mit Schritt S10 abgefragt, ob die Perspektive R(i, j) = N-1 ist. Wenn dies der Fall ist, wird gemäß Schritt S11 der Pixel bzw. Subpixel aus dem rechten Bild geholt. Außerdem wird wiederum gemäß Schritt S9 der Spaltenindex j um 1 inkrementiert, zu Schritt S2 zurückgesprungenen und der Ablauf wiederholt.

Wenn hingegen der Schritt S10 mit "nein" beantwortet wird, so wird mit Schritt S12 abgefragt, ob der Indikator *Verdeckung(i, j)* = 0 (s.u.) ist. Wenn dies nicht der Fall ist, erfolgt ein Rücksprung zu Schritt S9, mit dem der Spaltenindex j um 1 inkrementiert wird, sowie eine Wiederholung des Ablaufes mit Schritt S2.

Wenn der Indikator *Verdeckung(i, j)* = 0 ist (das heißt es existiert im rechten Bild ein zu einem Bildpunkt im linken Bild korrespondierender Bildpunkt) so wird mit Schritt S13 k = 0 gesetzt und mit Schritt S14 abgefragt, ob k >= N-1 ist. Wenn dies der Fall ist, erfolgt ein Rücksprung zu Schritt S9, mit dem wiederum der Spalten-index j um 1 inkrementiert wird, sowie eine Wiederholung des Ablaufes mit Schritt 52.

Wenn die Abfrage mit Schritt 514 jedoch mit "nein" beantwortet wird, wird gemäß Schritt S15 l := $(1 - \alpha_k)$ -j + $\alpha_k$ -j' gesetzt und mit Schritt S16 abgefragt, ob k = R(i, l) ist. Wenn dies nicht der Fall ist, wird gemäß Schritt S18 k um 1 inkrementiert.

Wenn die Abfrage gemäß Schritt S16 jedoch mit "ja" beantwortet wird, wird gemäß Schritt S17 zunächst der Pixel bzw. Subpixel mit P(i, l) := B(i, j) geholt und dann mit Schritt S18 fortgefahren. Im Anschluss an Schritt S18 erfolgt ein Rücksprung zu Schritt S14 und eine Wiederholung des Ablaufes mit diesem Schritt 514.

Bei einer zweiten Ausführungsform der Erfindung (Figuren 4A, 4B) stellt wiederum jedes Zwischenbild eine Perspektive dar. Hierbei wird jedoch für jeden Displaypixel/Display-Subpixel zurückgerechnet, aus welcher Perspektive und durch welche Verschiebung er sich ergibt.

Im Detail wird wie folgt vorgegangen:

Die Bilder seien wiederum in der Stereo-Normalform gegeben, so dass jede Zeile im linken Bild mit der entsprechenden Zeile im rechten Bild korrespondiert. Dies kann ggf. wiederum durch vorgeschaltete Transformationen erreicht werden.

Ferner sei die Zeile i fest gegeben.

Zu jedem Bildpunkt B(i, j) im linken Bild wird mit der Analyseeinheit 12 ein Indikator *Verdeckung(i, j)* und ein Zeiger *Wohin(i, j)* erzeugt.

Der Indikator *Verdeckung(i, j)* gibt an, ob es für den Bildpunkt B(i, j) im linken Bild einen korrespondierenden Bildpunkt B(i, j') im rechten Bild gibt, ob dieser sich in einer Rechtsverdeckung befindet, oder ob sich vor diesem Bildpunkt B(i, j) im rechten Bild eine Linksverdeckung befindet. Somit werden die Werte der *Verdeckung(i, j)* mit der Analyseeinheit 12 wie folgt definiert:

$$\textit{Verdeckung(i, j)} = \begin{cases} 1, & \text{wenn sich vor } \textit{Wohin(i, j)} \text{ eine Linksverdeckung befindet,} \\ 0, & \text{wenn es eine Korrespondenz im rechten Bild gibt,} \\ -1, & \text{wenn sich der Bildpunkt B(i, j) in einer Rechtsverdeckung befindet.} \end{cases}$$

Für den Zeiger *Wohin(i, j)* ist *Wohin(i, j)* = j', wenn *Verdeckung(i, j)* = 0 ist, sonst ist *Wohin(i, j)* undefiniert.

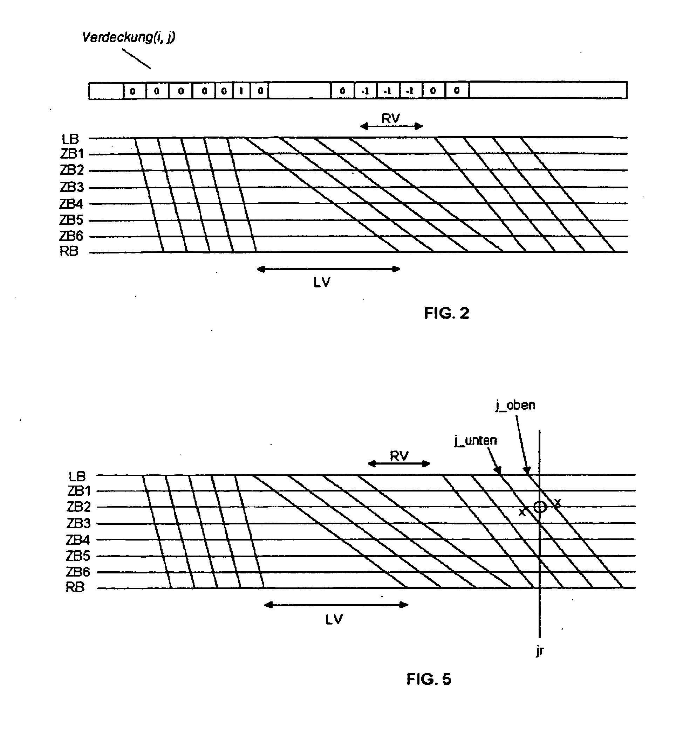

In Figur 2 sind die oben definierten Werte der *Verdeckung(i, j),* sowie die verschiedenen Möglichkeiten einer Korrespondenz bzw. einer Rechtsverdeckung RV und einer Linksverdeckung LV für acht Perspektiven, nämlich ein linkes Bild LB, ein erstes bis sechstes Zwischenbild ZB1,...ZB6 und ein rechtes Bild RB dargestellt.

Für jede Zeile i des Bildes wird das erfindungsgemäße Verfahren gemäß dem in den Figuren 4A und 4B gezeigten Flussdiagramm (zweite Ausführungsform der Erfindung) wie folgt durchgeführt:

Nach dem Start des Verfahrens werden in einem Schritt S1 ein Zeiger jr zur Bezeichnung eines Subpixels und ein Zeiger jl zur Bezeichnung eines Pixels jeweils auf 0 gesetzt. Ferner wird in einem Schritt S1 a der Zeiger jl solange um 1 inkrementiert, bis der Indikator *Verdeckung(i, j)* größer gleich 0 geworden ist (eine entsprechende Abfrage ist als Bestandteil des Schrittes S1a anzusehen).

Wenn dies der Fall ist, beginnt mit einem Schritt S2 eine Schleife über alle Subpixel jr der Zeile i (für die das Verfahren gerade durchgeführt wird) zu laufen. Der Pixel(i, jr) ist dabei der zum Subpixel jr gehörende Pixel, wobei sich ein Pixel in bekannter Weise aus den drei Subpixeln R, G, B zusammensetzt.

Sofern gemäß der Abfrage mit Schritt S2 jr größer ist als die Anzahl der Subpixel pro Zeile ist, wird das Verfahren mit Schritt S7 für die aktuelle Zeile i beendet und ggf. für eine nächste Zeile erneut mit "Start" begonnen. Andernfalls wird gemäß Schritt S3 für jr die Perspektive R(i, jr) aus dem Speicher 31 geholt, die auf diesem Subpixel jr angezeigt werden muss.

Ist gemäß der Abfrage mit Schritt 54 diese Perspektive "R(i, jr) = 0" ("ja"), so wird gemäß Schritt S8 der Subpixel aus dem linken Bild geholt. Außerdem wird dann gemäß Schritt S10 jr um 1 inkrementiert und zu Schritt S2 zurückgesprungen und der Ablauf damit wiederholt.

Wird jedoch die Abfrage mit Schritt S4 mit "nein" beantwortet (d.h. R(i, jr) ist ungleich 0), so wird mit Schritt S5 abgefragt, ob die Perspektive "R(i, jr) = N - 1" (N = Anzahl der Perspektiven) ist. Wenn dies der Fall ist, wird gemäß Schritt S9 der Subpixel aus dem rechten Bild geholt. Außerdem wird dann gemäß Schritt S10 jr um 1 inkrementiert und zu Schritt S2 zurückgesprungen und der Ablauf damit wiederholt.

Wird hingegen der Schritt S5 mit "nein" beantwortet (d.h. R(i, jr) ist ungleich N - 1), so beginnt mit Schritt S6 der eigentliche Suchvorgang mit der Definition "oben = false" und "unten = false".

Wird die Abfrage gemäß Schritt S11 "oben = false oder unten = false" mit "ja" beantwortet, so ist der Subpixel noch nicht von oben bzw. unten eingegrenzt, und es ist gemäß der Schritte S12 bis S17 weiter zu suchen. Wird hingegen Schritt S11 mit "nein" beantwortet, so ist der Subpixel eingegrenzt und kann gemäß Schritt S18 aus dem linken oder rechten Bild geholt werden. Für diesen Schritt S18 sind vier Fälle zu unterscheiden:

## Fall 1:    j_oben - j_unten <= 1 und *Wohin(i, j_oben) - Wohin(i, j_unten) < = 1:*

In diesem Fall gibt es eine eindeutige Korrespondenz, und der Subpixel kann vom linken Bild geholt werden. Dieser Fall ist schematisch in Figur 5 dargestellt. Hier muß ein Bildpunkt aus dem linken Bild gewählt werden, der sich im Zwischenbild (Zwischenperspektive) ZB2 aus j_unten und j_oben ergibt.

## Fall 2:    j_oben - j_unten > 1 und *Wohin(i, j_oben) - Wohin(i, j_unten) < = 1:*

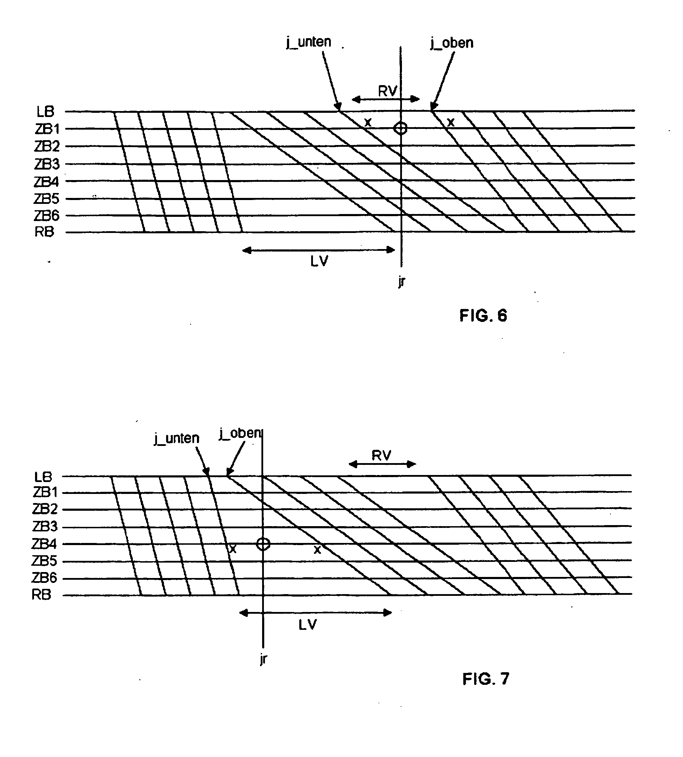

In diesem Fall liegt eine Rechtsverdeckung vor, und es kann der Subpixel vom linken Bild geholt werden. Dieser Fall ist schematisch in Figur 6 dargestellt.

## Fall 3:    j_oben - j_unten <= 1 und *Wohin(i, j_oben) - Wohin(i, j_unten) > 1:*

In diesem Fall liegt eine Linksverdeckung vor, und es kann der Subpixel vom rechten Bild geholt werden. Dieser Fall ist schematisch in Figur 7 dargestellt.

## Fall 4:    j_oben – j_unten > 1 und *Wohin(i, j_oben) - Wohin(i, j_unten) > 1:*

Dieser Fall ist in der Realität nicht zulässig, da in einem gleichen Bereich nicht gleichzeitig eine Rechts- und eine Linksverdeckung vorliegen kann.

Im Anschluss an diesen Schritt S18 wird wiederum gemäß Figur 4A und Schritt S10 jr um 1 inkrementiert, zu Schritt S2 zurückgesprungen und der Ablauf damit wiederholt.

Wird hingegen die Abfrage gemäß Schritt S11 mit "ja" beantwortet, so wird gemäß Schritt S12 eine neue Position "jl_PositionNeu" berechnet. Ferner wird in Abhängigkeit von der Perspektive R(i, jr) berechnet, wohin der Bildpunkt B(i, jl) abgebildet werden würde.

Ist gemäß der Abfrage mit Schritt S13 diese neue Position jl_PositionNeu = Pixel(i, jr), so ist der abgebildete Bildpunkt gefunden. Gemäß Schritt S15 wird dann "oben = true", "unten = true", "j_oben_= jl" und "j_unten = jl" gesetzt und der Subpixel über die mit "nein" zu beantwortende Abfrage gemäß Schritt S11 gemäß dem Schritt S18 und den oben erläuterten vier Fällen geholt.

Wird jedoch die Abfrage mit Schritt S13 mit "nein" beantwortet und ist gemäß der Abfrage mit Schritt S14 die neue Position "jl_PositionNeu > Pixel(i, jr)" ("ja"), so befindet sich diese oberhalb vom Pixel(i, jr). Es wird nun gemäß Schritt S16 "oben = true" und "j_oben = jl" gesetzt und jl um 1 dekrementiert. Weiterhin wird (im Flussdiagramm als Bestandteil von Schritt S16 anzusehen) geprüft, ob der Indikator *Verdeckung(i, j)* größer oder gleich 0 ist. Wenn dies nicht der Fall ist, wird jl so lange dekrementiert, bis dies der Fall ist.

Wird die Abfrage gemäß Schritt S14 jedoch mit "nein" beantwortet, so befindet sich die neue Position unterhalb vom Pixel(i, jr). Es wird nun gemäß Schritt S17 "unten = true" und "j_unten = jl" gesetzt und jl um 1 inkrementiert. Ferner wird (im Flussdiagramm als Bestandteil von Schritt S17 anzusehen) geprüft, ob der Indikator *Verdeckung(i, j)* größer oder gleich 0 ist. Wenn dies nicht der Fall ist, wird jl so lange inkrementiert, bis dies der Fall ist.

Im Anschluss an die Schritte S15, S16 bzw. S17 erfolgt jeweils ein Rücksprung zum Schritt S11 und eine Fortsetzung der Schleife mit einer erneuten Abfrage, ob "oben = false oder unten = false" ist.

Abwandlungen des oben beschriebenen Verfahrens können sich durch andere Optimierungsstrategien ergeben, indem der Pixel jt nicht vom vorherigen Subpixel jr, sondern z.B. aus der vorherigen Zeile genommen wird, in der der Pixel jl gespeichert wurde. Dadurch können ggf. einige Schritte zum optimalen Pixel jl eliminiert werden.

Es wäre z.B. auch möglich, den Indikator *Verdeckung* und den Zeiger *Wohin* zu einem Feld zusammenzufassen. In diesem Fall wird bei einer Rechtsverdeckung z.B. *Wohin(i, j)* := -1 gesetzt. Dies zeigt an, dass es keine Korrespondenz gibt. Der Fall einer Linksverdeckung kann dann daran erkannt werden, dass *Wohin(i, j_oben) - Wohin(i, j_unten) > 1* ist.

Mit dem erfindungsgemäßen Verfahren kann eine große Anzahl N von Perspektiven, z.B. N = 1024 oder 2048 gewählt werden, so dass sich völlig neue Möglichkeiten bei der 3D-Visualisierung von Bildern ergeben.

Dabei hat sich gezeigt, dass mit zunehmender Anzahl N von Perspektiven die Bilder immer klarer und die Übergangszonen zwischen den Sehzonen immer schmaler werden.

Man könnte zwar vermuten, dass die Bildqualität sinkt, da für jede einzelne Perspektive immer weniger Bildpunkte zur Verfügung stehen. Dies ist jedoch nicht der Fall, da die Anzahl der für das einzelne Auge eines Betrachters sichtbaren Bildpunkte von der Größe der Subpixel und der Größe und Brennweite der Lentikularlinsen oder Parallaxenbarriere abhängen. Man sieht dort dann zwar mehr Perspektiven. Diese sind aber konsistenter, da der Abstand auf der Stereobasis geringer ist.

Ein pseudoholographischer Effekt ergibt sich, wenn die Stereobasis zwischen dem linken und dem rechten Bild besonders groß ist (z.B. 80 - 90 cm). In diesem Fall wandert der Betrachter länger durch die verschiedenen Sehzonen und hat so einen mehr holographischen Eindruck des "Herumgehens" um das Objekt.

Die hier beschriebenen Verfahren sind sowohl auf autostereoskopischen Displays als auch auf autostereoskopische Adapterscheiben auf der Basis von Linsen oder Parallaxen-Barrieresystemen anwendbar.

Ferner ist es möglich, den Schritt der Korrespondenzanalyse nicht am Ort der Darstellung der Bilder, sondern z.B. am Ort der Aufnahme der Bilder durchzuführen und mit einem Datenkompressionsverfahren (z.B. MPEG-4) mit den beiden Stereobildern an den Ort der Darstellung zu übertragen.

Des Weiteren besteht die Möglichkeit, dass die Korrespondenzanalyse durch Transformation einer mitübertragenen Tiefenkarte der Stereobilder erzeugt wird.

Die erfindungsgemäßen Verfahren werden vorzugsweise mit Hilfe eines Computerprogramms ausgeführt.

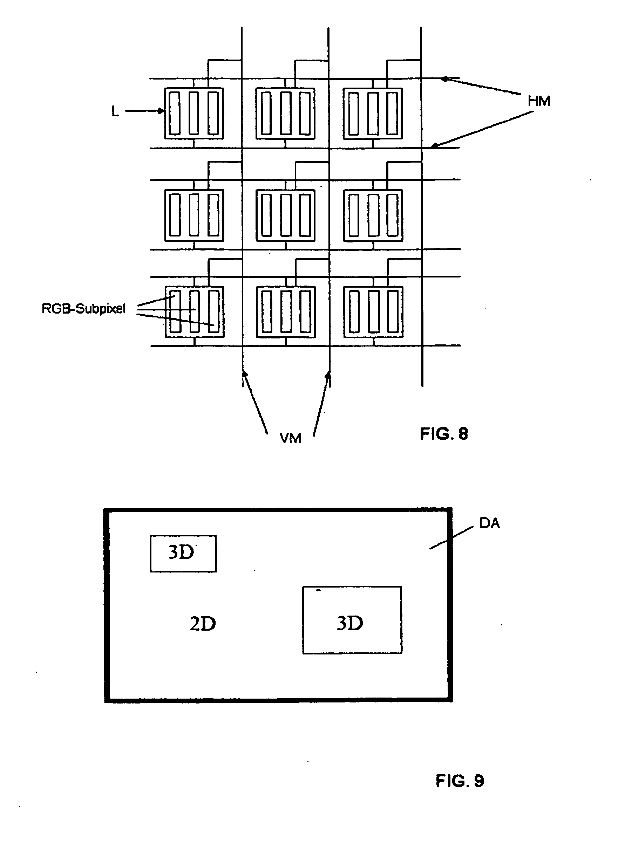

Die Realisierung der erfindungsgemäßen Verfahren ist z.B. gemäß Figur 8 mit einer Mehrzahl von Linsen L (insbesondere Nanolinsen in Liquid-Lense-Technologie) vorteilhaft möglich, die über jeweils einem Pixel (RGB-Farbe) oder einem Subpixel (nur R- oder G- oder B-Farbe) eines Displays angeordnet sind. Die Linsen L werden dabei jeweils einzeln elektronisch mittels horizontaler Matrixleitungen HM und vertikaler Matrixleitungen VM so angesteuert, dass nur diejenigen Bildpunkte des darunterliegenden Displays aktiviert bzw. erzeugt werden, die auch tatsächlich auf dem Display zur Darstellung des betreffenden synthetisierten Zwischenbildes angezeigt werden müssen.

Da jedes Pixel individuell ansteuerbar ist, können damit gemäß Figur 9 auch einzelne Bereiche des Displays DA in einen 3D-Modus geschaltet werden, während andere Bereiche nur ein 2D-Bild darstellen. Hierzu wird zeilen- und spaltensequentiell für jeden Bildpunkt der An- oder Abschaltimpuls zugeführt. Nur wenn bei einer Linse der horizontale und vertikale Impuls gleichzeitig anliegen, wird die Linse an- oder ausgeschaltet.

**Patentansprüche**

1. Verfahren zur Erzeugung von dreidimensionalen Bildern zur Wiedergabe auf einem autostereoskopischen Display oder einer autostereoskopischen Leinwand, mit einer vorgebbaren Anzahl N > 2 von Perspektiven, aus zugeführten Bildern mit einer Anzahl M ≥ 2 von Perspektiven, wobei M < N ist und wobei N - M Zwischenperspektiven durch Synthese von Bildpunkten in der Weise erzeugt werden, dass mindestens einer der Bildpunkte einer Zwischenperspektive, der auf dem Display oder der Leinwand zur Wiedergabe der betreffenden Zwischenperspektive nicht angezeigt werden muss, nicht synthetisiert wird,

wobei das Verfahren auf Pixel-Ebene oder auf Subpixel-Ebene durchgeführt wird, wobei zu jedem Bildpunkt B(i, j) eines zugeführten Bildes einer ersten Perspektive eine Korrespondenzmatrix (Wohin (i, j)) und eine Verdeckungsmatrix (Verdeckung (i, j)) erstellt wird, wobei die Verdeckungsmatrix (Verdeckung (i, j)) angibt, ob es für den Bildpunkt B(i, j) im zugeführten Bild der ersten Perspektive einen korrespondierenden Bildpunkt B(i', j') im zugeführten Bild einer zweiten Perspektive gibt, ob dieser sich in einer Rechtsverdeckung befindet, oder ob sich vor diesem Bildpunkt B(i, j) in dem Bild der zweiten Perspektive eine Linksverdeckung befindet, und

wobei die Korrespondenzmatrix (Wohin (i, j)) am Punkt (i, j) den Wert j' annimmt, wenn es eine Korrespondenz im rechten Bild gibt,

und wobei in der erstellten Korrespondenzmatrix (Wohin (i, j)) und der Verdeckungsmatrix (Verdeckung (i, j)) die anzuzeigenden Pixel oder Subpixel gesucht werden, wobei das Suchen in der Verdeckungsmatrix (Verdeckung (i, j)) und der Korrespondenzmatrix (Wohin (i, j)) derart erfolgt, indem zunächst in Abhängigkeit von einer Perspektive R(i, j) berechnet wird, wohin der Bildpunkt B(i,j) abgebildet würde und überprüft wird, ob der Pixel bzw. Subpixel eingegrenzt ist durch einen unteren Index (j_unten), für welchen eine Korrespondenz existiert und die Position in der Perspektive R(i, j) die größte Position unterhalb von j ist und durch einen oberen Index (j_oben), für welchen eine Korrespondenz existiert und die Position in der Perspektive R(i, j) die kleinste Position oberhalb von j ist und falls dieser noch nicht eingrenzt ist, eine neue Position (jl_Position Neu) berechnet wird und wobei dann diese neue Position (jl_Position Neu) überprüft wird, ob der abgebildete berechnete Bildpunkt gefunden wurde und falls nicht, dann solange inkrementell und/oder dekrementell ein Suchindex (jl) verändert wird und eine neue Position (jl_Position Neu) mit dem Suchindex (jl) berechnet wird, bis dieser gefunden ist, und wobei basierend auf der Matrix R(i, j) bzw. R(i, jr) entschieden wird, welche Perspektive von dem jeweiligen Pixel j bzw. Subpixel jr einer Zeile i des Displays anzuzeigen ist, wobei eine Perspektive durch eines der zugeführten Bilder oder eine synthetisierte Zwischen perspektive gebildet ist.

2. Verfahren nach Anspruch 1, bei dem die zugeführten Bilder M = 2 Perspektiven in Form eines linken und eines rechten Bildes aufweisen.

3. Verfahren nach Anspruch 1, **dadurch gekennzeichnet, dass** die Korrespondenzmatrix (Wohin (i, j)) und die Verdeckungsmatrix (Verdeckung (i, j)) in einer Matrix zusammengefasst werden, insbesondere wobei bei einer Rechtsverdeckung der Wert der Korrespondenzmatrix (Wohin (i, j)) auf -1 gesetzt wird.

4. Verfahren nach Anspruch 1, **dadurch gekennzeichnet, dass** die Korrespondenzmatrix (Wohin (i, j)) durch Transformation einer Tiefenkarte der beiden zugeführten Bilder erzeugt wird.

5. Verfahren nach Anspruch 4, bei dem in einer Synthesephase die N - M Zwischenperspektiven durch eine virtuelle Kamerafahrt entlang der Stereobasis zwischen einem Bildpunkt B(i, j) eines zugeführten Bildes der ersten Perspektive und dem korrespondierenden Bildpunkt B(i', j') eines zugeführten Bildes der zweiten Perspektive synthetisiert werden.

6. Verfahren nach Anspruch 5, bei dem zur Erzeugung von N - 2 (M = 2) Zwischenperspektiven $\alpha_k$ Stützstellen mit:

$$0 < \alpha_k < 1 \quad \text{für } k = 1, ..., N - 2$$

gewählt werden, an denen die Bildpunkte B(i, j($\alpha_k$)) einer Zwischenperspektive zusammengefasst werden.

7. Verfahren nach einem der Ansprüche 1 bis 6, **dadurch gekennzeichnet, dass** die Anzahl der zu erzeugenden Perspektiven von einem Benutzer frei gewählt werden.

8. Vorrichtung zur Durchführung des Verfahrens nach einem der vorhergehenden Ansprüche,
mit einer Analyseeinheit (12) zur Korrespondenzanalyse zwischen Bildpunkten B(i, j) eines zugeführten Bildes einer ersten, insbesondere linken Perspektive und Bildpunkten B(i', j') in einem zugeführten Bild einer zweiten, insbesondere rechten Perspektive, sowie
einer Bildsyntheseeinheit (15) zur Erzeugung mindestens einer Zwischenperspektive durch Synthese von Bildpunkten in der Weise, dass mindestens ein Bildpunkt der mindestens einen Zwischenperspektive, der auf dem Display oder der Leinwand zur Wiedergabe der betreffenden Zwischenperspektive nicht angezeigt werden muss, nicht synthetisiert wird,
wobei auf Pixel-Ebene oder auf Subpixel-Ebene zu jedem Bildpunkt B(i, j) eines zugeführten Bildes einer ersten Perspektive eine Korrespondenzmatrix (Wohin (i, j)) und eine Verdeckungsmatrix (Verdeckung (i, j)) erstellt wird, wobei die Verdeckungsmatrix (Verdeckung (i, j)) angibt, ob es für den Bildpunkt B(i, j) im zugeführten Bild der ersten Perspektive einen korrespondierenden Bildpunkt B(i', j') im zugeführten Bild einer zweiten Perspektive gibt, ob sich dieser in einer Rechtsverdeckung befindet oder ob sich vor diesem Bildpunkt B(i, j) in dem Bild der zweiten Perspektive eine Linksverdeckung befindet und wobei die Korrespondenzmatrix (Wohin (i, j)) am Punkt (i, j) den Wert j' annimmt, wenn es eine Korrespondenz im rechten Bild gibt und wobei in der erstellten Korrespondenzmatrix (Wohin (i, j)) und der Verdeckungsmatrix (Verdeckung (i, j)) die anzuzeigenden Pixel oder Subpixel gesucht werden, wobei das Suchen in der Verdeckungsmatrix (Verdeckung (i, j)) und der Korrespondenzmatrix (Wohin (i, j)) derart erfolgt, indem zunächst in Abhängigkeit von einer Perspektive R(i, j) berechnet wird, wohin der Bildpunkt B(i, j) abgebildet würde und überprüft wird, ob der Pixel bzw. Subpixel eingegrenzt ist durch einen unteren Index (j_unten), für welchen eine Korrespondenz existiert und die Position in der Perspektive R(i, j) die größte Position unterhalb von j ist und durch einen oberen Index (j_oben), für welchen eine Korrespondenz existiert und die Position in der Perspektive R(i, j) die kleinste Position oberhalb von j ist und falls dieser noch nicht eingrenzt ist, eine neue Position (jl_Position Neu) berechnet wird und wobei dann diese neue Position (jl_Position Neu) überprüft wird, ob der abgebildete berechnete Bildpunkt gefunden wurde und falls nicht, dann solange inkrementell und/oder dekrementell ein Suchindex (jl) verändert wird und eine neue Position (jl_Position Neu) mit dem Suchindex (jl) berechnet wird, bis dieser gefunden ist, und wobei basierend auf der Matrix R(i, j) bzw. R(i, jr) entschieden wird, welche Perspektive von dem jeweiligen Pixel j bzw. Subpixel jr einer Zeile i des Displays anzuzeigen ist, wobei eine Perspektive durch eines der zugeführten Bilder oder eine synthetisierte Zwischenperspektive gebildet ist.

9. Vorrichtung zur Wiedergabe von dreidlmensionalen, insbesondere pseudoholographischen Bildern, insbesondere in Form eines autostereoskopischen Mehrbetrachter-Visualisierungssystems (Multiview-System), mit einer Vorrichtung nach Anspruch 8 und einem autostereoskopischen Display (3) oder einer autostereoskopischen Leinwand.

**Claims**

1. Method for producing three-dimensional images for reproduction on an autostereoscopic display or an autostereoscopic screen, with a specifiable number N > 2 of perspectives, from fed images with a number $M \geq 2$ of perspectives, wherein M < N and wherein N - M intermediate perspectives are produced by synthesising picture elements in such a manner that at least one of the picture elements of an intermediate perspective that does not have to be displayed on the display or screen in order to reproduce the intermediate perspective in question is not synthesised, wherein the method is carried out at pixel level or at subpixel level, wherein for each picture element B(i, j) of a fed image of a first perspective a correspondence matrix (Whereto (i, j)) and a masking matrix (Masking (i, j)) are prepared, wherein the masking matrix (Masking (i, j)) indicates whether the picture element B(i, j) in the fed image of the first perspective has a corresponding picture element B(i', j') in the fed image of a second perspective, whether that picture element is in a right masking, or whether there is a left masking before that picture element B(i, j) in the image of the second perspective, and wherein the correspondence matrix (Whereto (i, j)) assumes the value j' at point (i, j) if there is a correspondence in the right image, and wherein the pixels or subpixels to be displayed are sought in the prepared correspondence matrix (Whereto (i, j)) and the masking matrix (Masking (i, j)), wherein the search in the masking matrix (Masking (i, j)) and the correspondence matrix (Whereto (i, j)) is carried out by first calculating, in dependence on a perspective R(i, j), where the picture element B(i, j) would be displayed and checking whether the pixel or subpixel is bounded by a lower index (j_lower), for which there is a correspondence and the position in the perspective R(i, j) is the greatest position below j, and by an upper index (j_upper), for which there is a correspondence and the position in the perspective R(i, j) is the smallest position above j, and, if it is not yet bounded, calculating a new position (jl_Position New), and wherein that new position (jl_Position New) is then checked for whether the displayed calculated picture element has been found and, if not, a search index (jl) is changed incrementally and/or decrementally and a new position (jl_Position New) is calculated using the search index (jl) until the picture element is found, and wherein, on the basis of the matrix R(i, j) or R(i, jr), it is decided which perspective is to be displayed by the respective pixel j or subpixel jr of a row i of the display, wherein a perspective is formed by one of the fed images or a synthesised intermediate perspective.

2. Method according to claim 1, wherein the fed images have M = 2 perspectives in the form of a left image and a right image.

3. Method according to claim 1, **characterised in that** the correspondence matrix (Whereto (i, j)) and the masking matrix (Masking (i, j)) are combined in a matrix, in particular wherein in the case of right masking the value of the correspondence matrix (Whereto (i, j)) is set at -1.

4. Method according to claim 1, **characterised in that** the correspondence matrix (Whereto (i, j)) is produced by transformation of a depth map of the two fed images.

5. Method according to claim 4, wherein, in a synthesis phase, the N - M intermediate perspectives are synthesised by a virtual camera movement along the stereo basis between a picture element B(i, j) of a fed image of the first perspective and the corresponding picture element B(i', j') of a fed image of the second perspective.

6. Method according to claim 5, wherein, for the production of N - 2 (M = 2) intermediate perspectives, $\alpha_k$ supporting points with

$$0 < \alpha_k < 1 \quad \text{for } k = 1, ..., N - 2$$

are chosen, at which the picture elements $B(i, j(\alpha_k))$ of an intermediate perspective are combined.

7. Method according to any one of claims 1 to 6, **characterised in that** the number of perspectives to be produced can be chosen arbitrarily by a user.

8. Device for carrying out the method according to any one of the preceding claims, having an analysis unit (12) for correspondence analysis between picture elements B(i, j) of a fed image of a first, in particular left perspective and picture elements B(i', j') in a fed image of a second, in particular right perspective, and
an image synthesis unit (15) for producing at least one intermediate perspective by synthesising picture elements in such a manner that at least one picture element of the at least one intermediate perspective that does not have to be displayed on the display or screen in order to reproduce the intermediate perspective in question is not synthesised,
wherein, at pixel level or at subpixel level, for each picture element B(i, j) of a fed image of a first perspective there are prepared a correspondence matrix (Whereto (i, j)) and a masking matrix (Masking (i, j)), wherein the masking matrix (Masking (i, j)) indicates whether the picture element B(i, j) in the fed image of the first perspective has a corresponding picture element B(i', j') in the fed image of a second perspective, whether that picture element B(i, j) is in a right masking or whether there is a left masking before that picture element B(i, j) in the image of the second perspective, and wherein the correspondence matrix (Whereto (i, j)) assumes the value j' at point (i, j) if there is a correspondence in the right image, and wherein the pixels or subpixels that are to be displayed are sought in the prepared correspondence matrix (Whereto (i, j)) and the masking matrix (Masking (i, j)), wherein the search in the masking matrix (Masking (i, j)) and the correspondence matrix (Whereto (i, j)) is carried out by first calculating, in dependence on a perspective R(i, j), where the picture element B(i, j) would be displayed and checking whether the pixel or subpixel is bounded by a lower index (j_lower), for which there is a correspondence and the position in the perspective R(i, j) is the greatest position below j, and by an upper index (j_upper), for which there is a correspondence and the position in the perspective R(i, j) is the smallest position above j, and, if it is not yet bounded, calculating a new position (jl_Position New), and wherein that new position (jl_Position New) is then checked for whether the displayed calculated picture element has been found and, if not, a search index (jl) is changed incrementally and/or decrementally and a new position (jl_Position New) is calculated using the search index (jl) until the picture element is found, and wherein, on the basis of the matrix R(i, j) or R(i, jr), it is decided which perspective is to be displayed by the respective pixel j or subpixel jr of a row i of the display, wherein a perspective is formed by one of the fed images or a synthesised intermediate perspective.

9. Device for reproducing three-dimensional, in particular pseudo-holographic, images, in particular in the form of an autostereoscopic multiuser visualisation system (multiview system), having a device according to claim 8 and an autostereoscopic display (3) or an autostereoscopic screen.

**Revendications**

1. Procédé de réalisation d'images tridimensionnelles destinées à être reproduites sur un afficheur auto-stéréoscopique ou un écran auto-stéréoscopique, comprenant un nombre N > 2 pouvant être prédéterminé de perspectives, à partir d'images amenées ayant un nombre M ≥ 2 de perspectives, dans lequel M < N et N - M perspectives intermédiaires sont produites par le biais de la synthèse de points d'image d'une manière telle qu'au moins l'un des points d'image d'une perspective intermédiaire, qui ne doit pas être affiché sur l'afficheur ou l'écran aux fins de la reproduction de la perspective intermédiaire concernée, n'est pas synthétisé,
étant entendu que le procédé est exécuté au niveau des pixels ou à un niveau inférieur aux pixels, étant entendu que pour chaque point d'image B(i, j) d'une image amenée d'une première perspective, une matrice de correspondance (contenant (i, j)) et une matrice de masquage (masquage (i, j)) sont produites, étant entendu que la matrice de masquage (masquage (i, j)) indique s'il existe, pour le point d'image B(i, j) se trouvant dans l'image amenée de la première perspective, un point d'image correspondant B(i', j') dans l'image amenée d'une deuxième perspective, si celui-ci se trouve dans un masquage à droite ou si un masquage à gauche se trouve avant ce point d'image B(i, j) dans l'image de la deuxième perspective, et
étant entendu que la matrice de correspondance (contenant (i, j)) adopte la valeur j' au point (i, j) lorsqu'il existe une correspondance dans l'image de droite,
et étant entendu que les pixels ou les éléments inférieurs aux pixels à afficher sont recherchés dans la matrice de correspondance produite (contenant (i, j)) et la matrice de masquage (masquage (i, j)), étant entendu que la recherche dans la matrice de masquage (masquage (i, j)) et la matrice de correspondance (contenant (i, j)) est réalisée en ce qu'en premier lieu, en fonction d'une perspective R(i, j), on calcule où le point d'image B(i, j) serait représenté et on examine si le pixel ou l'élément inférieur au pixel est délimité par un indice inférieur (j_bas) pour lequel il existe une correspondance et la position dans la perspective R(i, j) est la plus grande position en dessous de j et par un indice supérieur (j_haut) pour lequel il existe une correspondance et la position dans la perspective R(i, j) est la plus petite position au-dessus de j, et s'il n'est pas encore délimité, une nouvelle position (jl_Position nouvelle) est calculée, puis cette nouvelle position (jl_Position nouvelle) est examinée afin de déterminer si le point d'image calculé représenté a été trouvé, et si  non, un indice de recherche (jl) est modifié de façon incrémentielle et/ou décrémentielle et une nouvelle position (jl_Position nouvelle) est calculée avec l'indice de recherche (jl) jusqu'à ce qu'il soit trouvé, étant entendu qu'on décide sur la base de la matrice R(i, j) ou R(i, jr) quelle perspective du pixel j ou de l'élément inférieur au pixel jr respectif d'une ligne i de l'afficheur doit être affichée, étant entendu qu'une perspective est formée par l'une des images amenées ou une perspective intermédiaire synthétisée.

2. Procédé selon la revendication 1, dans lequel les images amenées présentent M = 2 perspectives sous la forme d'une image gauche et d'une image droite.

3. Procédé selon la revendication 1, **caractérisé en ce que** la matrice de correspondance (contenant (i, j)) et la matrice de masquage (masquage (i, j)) sont agrégées dans une seule matrice, étant entendu en particulier qu'en cas de masquage à droite, la valeur de la matrice de correspondance (contenant (i, j)) est fixée à -1.

4. Procédé selon la revendication 1, **caractérisé en ce que** la matrice de correspondance (contenant (i, j)) est produite par la transformation d'une carte de profondeur des deux images amenées.

5. Procédé selon la revendication 4, dans lequel dans une phase de synthèse, les N - M perspectives intermédiaires sont synthétisées par le biais d'un déplacement virtuel de la caméra le long de la base stéréo entre un point d'image B(i, j) d'une image amenée de la première perspective et le point d'image correspondant B(i', j') d'une image amenée de la deuxième perspective.

6. Procédé selon la revendication 5, dans lequel pour la production de N - 2 (M = 2) perspectives intermédiaires, on choisit $\alpha_k$ endroits de support selon :

$$0 < \alpha_k < 1 \quad \text{pour } k = 1, \ldots, N - 2$$

auxquels les points d'image B(i, j($\alpha_k$)) d'une perspective intermédiaire sont agrégés.

7. Procédé selon l'une des revendications 1 à 6, **caractérisé en ce que** le nombre des perspectives à produire est choisi librement par un utilisateur.

8. Dispositif permettant l'exécution du procédé selon l'une des revendications précédentes, comprenant une unité d'analyse (12) destinée à l'analyse de correspondance entre des points d'image B(i, j) d'une image amenée d'une première perspective, en particulier gauche, et des points d'image B(i', j') se trouvant dans une image amenée d'une deuxième perspective, en particulier droite, ainsi qu'une unité de synthèse d'image (15) destinée à la production d'au moins une perspective intermédiaire par la synthèse de points d'image d'une manière telle qu'au moins un point d'image de l'au moins une perspective intermédiaire, qui ne doit pas être affiché sur l'afficheur ou l'écran aux fins de la reproduction de la perspective intermédiaire concernée, n'est pas synthétisé, étant entendu que pour chaque point d'image B(i, j) d'une image amenée d'une première perspective, une matrice de correspondance (contenant (i, j)) et une matrice de masquage (masquage (i, j)) sont produites au niveau des pixels ou à un niveau inférieur aux pixels, étant entendu que la matrice de masquage (masquage (i, j)) indique s'il existe, pour le point d'image B(i, j) se trouvant dans l'image amenée de la première perspective, un point d'image correspondant B(i', j') dans l'image amenée d'une deuxième perspective, si celui-ci se trouve dans une masquage à droite ou si une masquage à gauche se trouve avant ce point d'image B(i, j) dans l'image de la deuxième perspective, étant entendu que la matrice de correspondance (contenant (i, j)) adopte la valeur j' au point (i, j) lorsqu'il existe une correspondance dans l'image de droite, et étant entendu que les pixels ou les éléments inférieurs aux pixels à afficher sont recherchés dans la matrice de correspondance produite (contenant (i, j)) et la matrice de masquage (masquage (i, j)), étant entendu que la recherche dans la matrice de masquage (masquage (i, j)) et la matrice de correspondance (contenant (i, j)) est réalisée en ce qu'en premier lieu, en fonction d'une perspective R(i, j), on calcule où le point d'image B(i, j) serait représenté et on examine si le pixel ou l'élément inférieur au pixel est délimité par un indice inférieur (j_bas) pour lequel il existe une correspondance et la position dans la perspective R(i, j) est la plus grande position en dessous de j et par un indice supérieur (j_haut) pour lequel il existe une correspondance et la position dans la perspective R(i, j) est  la plus petite position au-dessus de j, et s'il n'est pas encore délimité, une nouvelle position (jl_Position nouvelle) est calculée, puis cette nouvelle position (jl_Position nouvelle) est examinée afin de déterminer si le point d'image calculé représenté a été trouvé, et si non, un indice de recherche (jl) est modifié de façon incrémentielle et/ou décrémentielle et une nouvelle position (jl_Position nouvelle) est calculée avec l'indice de recherche (jl) jusqu'à ce qu'il soit trouvé, étant entendu qu'on décide sur la base de la matrice R(i, j) ou R(i, jr) quelle perspective du pixel j ou de l'élément inférieur au pixel jr respectif d'une ligne i de l'afficheur doit être affichée, étant entendu qu'une perspective est formée par l'une des images amenées ou une perspective intermédiaire synthétisée.

9. Dispositif de reproduction d'images tridimensionnelles, en particulier pseudo-holographiques, en particulier sous la forme d'un système de visualisation à spectateurs multiples (système Multiview), comprenant un dispositif selon la revendication 8 et un afficheur auto-stéréoscopique (3) ou un écran auto-stéréoscopique.

FIG. 1

*Verdeckung(i, j)*

| 0 | 0 | 0 | 0 | 0 | 1 | 0 | | 0 | -1 | -1 | -1 | 0 | 0 |

RV

LB
ZB1
ZB2
ZB3
ZB4
ZB5
ZB6
RB

LV

**FIG. 2**

j_oben

j_unten

RV

LB
ZB1
ZB2
ZB3
ZB4
ZB5
ZB6
RB

LV

jr

**FIG. 5**

FIG. 3A

EP 2 027 728 B1

FIG. 3B

17

FIG. 4A

A

B

S11
oben = false oder unten = false ?    Nein    Subpixel holen    S18

Ja

S12    jl_PositionNeu berechnen

S15
j_oben = jl,
j_unten = jl,
oben = true,
unten = true

S13
Ja    jl_PositionNeu=Pixel(i, jr)?

Nein

S14
Ja    jl_PositionNeu>Pixel(i, jr)?    Nein

S16
j_oben = jl,
oben = true,
jl = jl - 1

S17
j_unten = jl,
unten = true,
jl = jl + 1

**FIG. 4B**

FIG. 6

FIG. 7

FIG. 8

FIG. 9

DA

S1

S2

S3

S4

Sn

B1

B2

B3

B4

Bn

FIG. 10

**EP 2 027 728 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040100464 A1